# EUROPÄISCHE PATENTANMELDUNG

(11) **EP 1 555 510 A1**
(43) Veröffentlichungstag der Anmeldung: **20.07.2005**
(21) Anmeldenummer: 04029187.4
(22) Anmeldetag: 09.12.2004
(51) Int. Cl.: G01C 9/32, G01C 25/00

(54) **Libelle für eine Wasserwaage**

(30) Priorität: 19.01.2004 DE 202004000780 U
(71) Anmelder: SOLA-Messwerkzeuge GmbH, 6840 Götzis (AT)
(72) Erfinder: Scheyer, Wolfgang, 6840 Götzis (AT)
(74) Vertreter: Hefel, Herbert, Dipl.-Ing.

(57) **Zusammenfassung**

Eine Libelle für eine Wasserwaage besteht aus einem durchsichtigen Material bestehenden Libellenkörper (1), wobei zumindest in einem bezogen auf die Längserstreckung des Libellenkörpers mittleren Abschnitt (6) des Libellenkörpers, in welchem sich die Markierungsringe (5) zum Anzeigen der Mittellage der Blase (3) befinden, die Oberseite (10) des Libellenkörpers (1) als um die Längsachse (30) des Libellenkörpers gekrümmte Fläche ausgebildet ist, welche über eine durchgehende Krümmung kantenfrei mit den Seitenflächen des Libellenkörpers verbunden ist. Die die Oberseite (10) des Libellenkörpers (1) bildende Fläche verläuft zumindest über den mittleren Abschnitt (6) des Libellenkörpers in Längsrichtung des Libellenkörpers (1) konvex gekrümmt, wobei im Längsmittelschnitt des Libellenkörpers (1) gesehen die Wanddicke (d) des Libellenköpers (1) im Bereich seiner Oberseite (10) über diesen mittleren Abschnitt (6) des Libellenkörpers (1) zur Längsmitte des Libellenkörpers (1) hin zunimmt.

## Beschreibung

Die Erfindung betrifft eine Libelle für eine Wasserwaage, mit einem aus einem durchsichtigen Material bestehenden Libellenkörper, der einen eine Libellenflüssigkeit enthaltenden Hohlraum aufweist und der mit Markierungsringen zum Anzeigen der Mittellage einer in der Libellenflüssigkeit eingeschlossen Blase versehen ist, wobei zumindest in einem bezogen auf die Längserstreckung des Libellenkörpers mittleren Abschnitt des Libellenkörpers, in welchem sich die Markierungsringe zum Anzeigen der Mittellage der Blase befinden, die Oberseite des Libellenkörpers als um die Längsachse des Libellenkörpers gekrümmte Fläche ausgebildet ist, welche über eine durchgehende Krümmung kantenfrei mit den Seitenflächen des Libellenkörpers verbunden ist.

Libellen für Wasserwaagen sind in Form von sogenannten Röhrenlibellen bekannt. Diese sind als relativ dünnwandiges Röhrchen ausgebildet, welches einen tonnenförmigen Hohlraum aufweist, in den die Libellenflüssigkeit eingefüllt wird. Der tonnenförmige Hohlraum wird beim Kunststoff-Spritzgießen des Röhrchens ausgebildet, wobei eine Zwangsentformung des zu diesem Zweck dünnwandig auszubildenden Röhrchens stattfindet.

Weiters sind sogenannte "Blocklibellen" bekannt. Hier wird der Libellenkörper mit einem zunächst zylindrischen oder leicht konischen Hohlraum gespritzt, der in der Folge tonnenförmig ausgedreht wird. Eine solche Blocklibelle, die eine vergleichsweise große Wandstärke aufweisen kann, ist beispielsweise in der EP 0 987 520 B1 beschrieben.

Neben Blocklibellen mit einer zylindrischen Außenkontur des Libellenkörpers sind auch solche mit einer quaderförmigen Außenkontur bekannt, welche die Befestigung der Libelle in der Libellenfassung erleichtert. Es ist hierbei bereits eine Libelle bekannt geworden, bei der in der Oberseite des Libellenkörpers eine Vergrößerungslinse ausgebildet ist, wodurch sich eine in Längsrichtung des Libellenkörpers konvex gewölbte Oberfläche des Libellenkörpers im Bereich der Vergrößerungslinse ergibt. Durch diese Vergrößerungslinse soll die Blase in der Libellenflüssigkeit optisch etwas vergrößert werden.

Nachteilig bei Blocklibellen mit quaderförmigen Außenkonturen ist es, dass bei Ablesungen die aus einer Blickrichtung durchgeführt werden, welche gegenüber der Blickrichtung senkrecht auf die Libelle um die Längsachse der Libelle verdreht ist, die Blase durch die Ecke zwischen der Oberseite und der Seitenfläche hindurch beobachtet werden muss. Die Blase erscheint dadurch "doppelt", sodass die Ablesung erschwert wird.

Es sind weiters Blocklibellen bekannt, die im Basisbereich, also zwischen der Unterseite und den Seitenflächen eckig ausgebildet sind und an der Oberseite abgerundet sind, wobei die die Oberseite des Libellenkörpers bildende Fläche um die Längsachse des Libellenkörpers gekrümmt ausgebildet ist und mit den Seitenflächen des Libellenkörpers über eine durchgehende Krümmung kantenfrei verbunden ist. Die zwischen den Seitenflächen über die Oberseite sich erstreckende gekrümmte Fläche ist hierbei halbzylindrisch ausgebildet. Nachteilig ist hierbei, dass bei einer Ablesung der Libelle aus einer Beobachtungsposition zentral über dem Längsmittelbereich der Libelle die auf der vom Beobachter abgewandten Seite des Hohlraums verlaufenden Abschnitte der Markierungsringe optisch weiter innen erscheinen als die auf der dem Betrachter zugewandten Seite des Hohlraums liegenden Abschnitte der Markierungsringe, wodurch die exakte Ablesung der Position der Libelle relativ zu den Markierungsringen erschwert wird.

Aufgabe der Erfindung ist es, eine Libelle mit einer verbesserten Ablesbarkeit bereitzustellen. Erfindungsgemäß gelingt dies durch eine Libelle mit den Merkmalen des Anspruchs 1. Eine erfindungsgemäße Libelle ist somit zumindest in einem mittleren Abschnitt des Libellenkörpers, in welchem sich die Markierungsringe zum Anzeigen der Mittellage der Blase befinden, im Bereich ihrer Oberseite"doppelt gekrümmt", also sowohl um die Längsachse des Libellenkörpers als auch in Richtung der Längsausdehnung des Libellenkörpers.

Durch die erfindungsgemäße Libelle kann eine derartige optische Darstellung der Markierungsringe erreicht werden, dass bei einer Ablesung der Libelle vom Bereich senkrecht über der Längsmitte der Libelle, zumindest für einen Beobachtungsabstand zwischen 15 cm und 40 cm der vom Betrachter abgelegene Bereich des Markierungsrings (der über die Unterseite des Hohlraums verläuft) weiter außen als der auf der Seite des Betrachters liegende Bereich des Markierungsrings (der über die Oberseite des Hohlraums verläuft) erscheint oder zumindest vom auf der Seite des Betrachters liegenden Bereich des Markierungsrings verdeckt wird. Die Ablesung der Position der Blase wird dadurch vereinfacht. Weiters ist aufgrund der "doppelt gekrümmten" Ausbildung des Libellenkörpers auch eine Ablesung von einer Position möglich, die gegenüber der senkrecht über der Libelle liegenden Position um die Längsachse der Libelle gedreht ist, ohne dass es zu einer Betrachtung der Blase durch ein Eck kommt. Eine erfindungsgemäße Libelle ermöglicht somit eine einfache und exakte Ablesung. Es kommt hierbei auch zu einer gewissen optischen Vergrößerung der Blase.

Weitere Vorteile und Einzelheiten der Erfindung werden im folgenden anhand der beiliegenden Zeichnung erläutert. In dieser zeigen:
- Fig. 1: eine perspektivisch Darstellung eines Ausführungsbeispiels einer erfindungsgemäßen Libelle;
- Fig. 2: die Libelle von Fig. 1 in Seitenansicht;
- Fig. 3: die Libelle von Fig. 1 in Stirnansicht;
- Fig. 4: einen Schnitt entlang der Linie A-A von Fig. 3;
- die Fig. 5 und 6: Schnitte entlang den Linien B-B und C-C von Fig. 2;
- Fig. 7: ein Ausführungsbeispiel einer Wasserwaage mit einer darin eingesetzten erfindungsgemäßen Libelle;
- Fig. 8: eine Endkappe der Wasserwaage von Fig. 7 in perspektivischer Darstellung;
- die Fig. 9 und 10: eine Seitenansicht und eine stirnseitige Ansicht der Endkappe von Fig. 8;
- Fig. 11: einen Schnitt entlang der Linie D-D von Fig. 10 und
- Fig. 12: entlang der Linie E-E von Fig. 10.

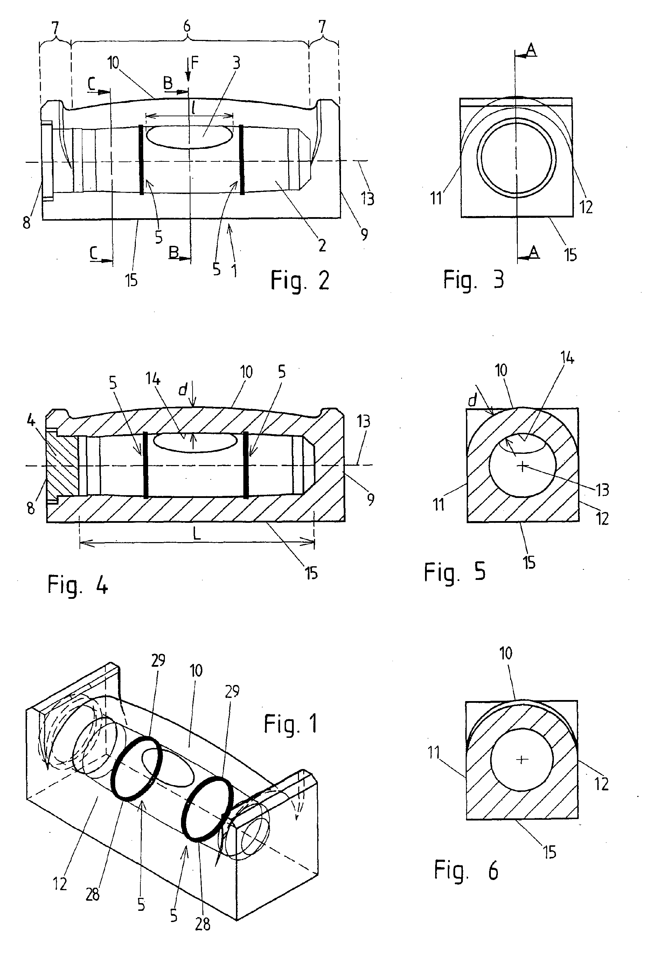

Ein Ausführungsbeispiel einer erfindungsgemäßen Libelle ist in den Fig. 1 bis 6 dargestellt. Die Libelle besitzt einen aus einem durchsichtigen Material bestehenden Libellenkörper 1, der in bekannter Weise einen tonnenförmigen Hohlraum 2 aufweist. Der Hohlraum 2 enthält eine Libellenflüssigkeit mit einer in dieser eingeschlossenen Blase 3. Die Blase 3 kann insbesondere von einem gasförmigen Medium wie Luft gebildet werden. Der Hohlraum 2 ist von einem Verschlussdeckel 4 verschlossen. Weiters ist der Libellenkörper 1 mit zwei Markierungsringen 5 zum Anzeigen der Mittellage der Blase 3 versehen.

Anschließend an einen in Bezug auf seine Längsausdehnung mittleren Abschnitt 6 des Libellenkörpers 1, in welchem sich die Markierungsringe 5 zum Anzeigen der Mittellage der Blase 3 befinden, besitzt der Libellenkörper 1 Montageabschnitte 7, die die beiden Stirnseiten 8, 9 des Libellenkörpers 1 bilden. Diese beiden Stirnseiten 8, 9 des Libellenkörpers 1 bzw. der Montageabschnitte 7 sind bevorzugterweise rechteckig ausgebildet. Die Montage des Libellenkörpers 1 in einer Fassung wird dadurch erleichtert.

Über die Ausdehnung des mittleren Abschnitts 6 des Libellenkörpers 1 wird die Oberseite 10 des Libellenkörpers 1 von einer um die Längsachse 13 des Libellenkörpers gekrümmten Fläche ausgebildet, die über eine durchgehende Krümmung ohne Ausbildung einer Kante bzw. Ecke, d. h. kantenfrei, mit den Seitenflächen 11, 12 des Libellenkörpers 1 verbunden ist.

Über diesen mittleren Abschnitt 6, in welchem sich die beiden Markierungsringe 5 befinden, verläuft die die Oberseite 10 des Libellenkörpers bildende Fläche in Längsrichtung des Libellenkörpers 1 nach außen gewölbt bzw. konvex gekrümmt. Hierbei nimmt im Längsmittelschnitt des Libellenkörpers 1 gesehen (Fig. 4) die Wanddicke d des Libellenkörpers 1 im Bereich seiner Oberseite 10 (also die Dicke des Wandabschnitts zwischen der Oberseite 10 und dem Hohlraum 2 des Libellenkörpers 1) zu seiner Längsmitte (welche mit der Schnittlinie B-B in Fig. 2 zusammenfällt) hin zu. Es besitzt also die Oberseite 10 einen geringeren Krümmungsradius als die obere Begrenzung 14 des Hohlraums 2. Günstigerweise kann im Längsmittelschnitt des Libellenkörpers 1 gesehen (Fig. 4) der Krümmungsradius der Oberseite 10 im Bereich zwischen 70 und 100mm, vorzugsweise im Bereich zwischen 80 und 90mm, und der Krümmungsradius der oberen Begrenzung 14 des Hohlraums 2 im Bereich zwischen 150 und 1200mm liegen.

Vorzugsweise nimmt die Wanddicke d des Libellenkörpers zumindest im Bereich seiner Längsmitte auch von den Seitenflächen 11, 12 zur Oberseite 10 hin zu, wie dies aus Fig. 5 ersichtlich ist. Beispielsweise kann der Krümmungsradius der die Oberseite 10 mit den Seitenflächen 11, 12 verbindenden Fläche im Querschnitt durch die Längsmitte gesehen (Schnittlinie B-B) im Bereich zwischen 6,5 und 9mm und der entsprechende Krümmungsradius der Begrenzung des Hohlraums 2 im Bereich zwischen 4 und 5,5mm liegen.

Die Seitenflächen 11, 12 sind mit der Unterseite 15 des Libellenkörpers 1 über rechte Winkel verbunden.

Die Libelle ist nach Art einer Blocklibelle ausgebildet, d. h. der Libellenkörper 1 wird von einem Spritzgussteil gebildet, welches zunächst mit einem zylindrischen oder konisch zu seiner Öffnung hin sich erweiternden (zur Erleichterung der Entformung) Hohlraum versehen ist, der in der Folge tonnenförmig ausgedreht wird.

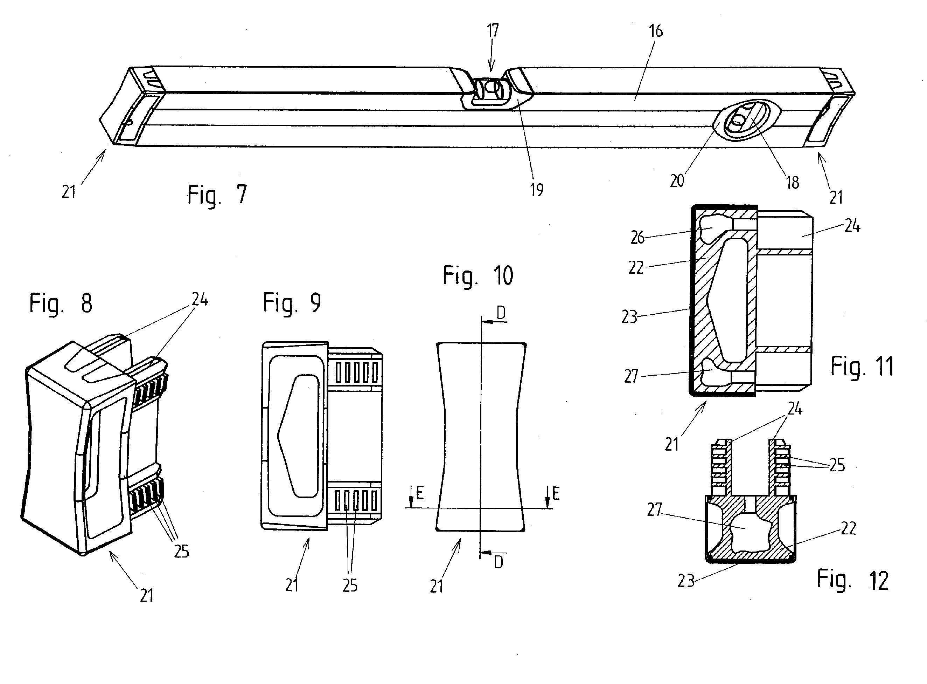

Fig. 7 zeigt eine perspektivische Darstellung einer Wasserwaage, in welche die in den Fig. 1 bis 6 gezeigte Libelle 17 zur Horizontalmessung eingebaut ist. Die Wasserwaage weist einen Wasserwaagenkörper 16 in Form eines Aluminium-Hohlprofils auf, der mit Ausnehmungen zum Einsetzen der Libellen 17, 18 für die Horizontalmessung und Vertikalmessung versehen ist. Die Messfläche der Wasserwaage befindet sich an der in Fig. 7 nicht sichtbaren Seite. Die Oberseite der Libelle 17 für die Horizontalmessung ist von der Messfläche abgewandt.

Die Libellen 17, 18 werden über Fassungen eingebaut, welche in herkömmlicher Weise ausgebildet sein können. Die Fassungen sind von Abdeckungen 19, 20 abgedeckt.

Stirnseitig ist der Wasserwaagenkörper 16 mit Endkappen 21 versehen. Diese sind aus Kunststoff ausgebildet, wobei vorzugsweise ein härterer Kunststoff 22 mit einem Überzug aus einem weicheren Kunststoff 23 versehen ist. Der vom härteren Kunststoff 22 gebildete Ansatz 24 zum Einstecken in den Wasserwaagenkörper 16 besitzt Lamellen 25, die mit der Innenwand des Wasserwaagenkörpers zusammenwirken und dem Herausziehen der eingesteckten Endkappe 21 aus dem Wasserwaagenkörper entgegenwirken.

Die Endkappen 21 sind im Spritzgussverfahren hergestellt, wobei vorzugsweise ein Gasinnendruckverfahren (GID-Spritzguss bzw. "gas injection moulding") eingesetzt wird. Es können dadurch Hohlräume 26, 27 ausgebildet werden, wodurch eine Materialeinsparung erreicht wird und auch die Dämpfung der Endkappe verbessert werden kann.

Bei einer erfindungsgemäßen Libelle kann eine derartige optische Abbildung erreicht werden, dass bei einer Beobachtung senkrecht auf die Libelle und vom Bereich oberhalb der Längsmitte (Blickrichtung F, vgl. Fig. 2 und Fig. 5) zumindest für einen Beobachtungsabstand zwischen 15cm und 40cm die ihre unteren Abschnitte 28 der Markierungsringe 5 jeweils vom oberen Abschnitt 29 verdeckt werden oder sogar außerhalb des Bereiches zwischen den oberen Abschnitten 29 der beiden Markierungsringe 5 sichtbar sind.

Vorzugsweise erstreckt sich der mittlere Abschnitt 6, über welchen der Libellenkörper 1 "doppelt gewölbt" ist zumindest über die Hälfte der Längsausdehnung I der Blase 3 beidseitig über den zwischen den beiden Markierungsringen 5 liegenden Bereich hinaus. Besonders bevorzugt ist es, wenn sich dieser doppelt gewölbte mittlere Abschnitt zumindest über die Länge L der Längsausdehnung des Hohlraums 2 erstreckt.

Unterschiedliche Modifikationen des gezeigten Ausführungsbeispiels der Erfindung sind denkbar und möglich, ohne den Bereich der Erfindung zu verlassen. So könnten beispielsweise zusätzlich zu den beiden Markierungsringen 5, die die Mittellage der Blase 3 anzeigen, weitere Markierungsringe vorhanden sein, die beispielsweise eine bestimmte Neigung der Libelle markieren.

### Legende

### zu den Hinweisziffern:

- 1: Libellenkörper
- 2: Hohlraum
- 3: Blase
- 4: Verschlussdeckel
- 5: Markierungsring
- 6: mittlerer Abschnitt
- 7: Montageabschnitt
- 8: Stirnseite
- 9: Stirnseite
- 10: Oberseite
- 11: Seitenfläche
- 12: Seitenfläche
- 13: Längsachse
- 14: Begrenzung
- 15: Unterseite
- 16: Wasserwaagenkörper
- 17: Libelle
- 18: Libelle
- 19: Abdeckung
- 20: Abdeckung
- 21: Endkappe
- 22: Kunststoff
- 23: Kunststoff
- 24: Ansatz
- 25: Lamelle
- 26: Hohlraum
- 27: Hohlraum
- 28: unterer Abschnitt
- 29: oberer Abschnitt

## Patentansprüche

1. Libelle für eine Wasserwaage, mit einem aus einem durchsichtigen Material bestehenden Libellenkörper (1), der einen eine Libellenflüssigkeit enthaltenden Hohlraum (2) aufweist und der mit Markierungsringen (5) zum Anzeigen der Mittellage einer in der Libellenflüssigkeit eingeschlossen Blase (3) versehen ist, wobei zumindest in einem bezogen auf die Längserstreckung des Libellenkörpers mittleren Abschnitt (6) des Libellenkörpers, in welchem sich die Markierungsringe (5) zum Anzeigen der Mittellage der Blase (3) befinden, die Oberseite (10) des Libellenkörpers (1) als um die Längsachse (30) des Libellenkörpers gekrümmte Fläche ausgebildet ist, welche über eine durchgehende Krümmung kantenfrei mit den Seitenflächen (11, 12) des Libellenkörpers verbunden ist, **dadurch gekennzeichnet, dass** die die Oberseite (10) des Libellenkörpers (1) bildende Fläche zumindest über den mittleren Abschnitt (6) des Libellenkörpers, in welchem sich die Markierungsringe (5) zum Anzeigen der Mittellage der Blase (3) befinden, in Längsrichtung des Libellenkörpers (1) konvex gekrümmt verläuft, wobei im Längsmittelschnitt des Libellenkörpers (1) gesehen die Wanddicke (d) des Libellenköpers (1) im Bereich seiner Oberseite (10) über diesen mittleren Abschnitt (6) des Libellenkörpers (1) zur Längsmitte des Libellenkörpers (1) hin zunimmt.

2. Libelle nach Anspruch 1, **dadurch gekennzeichnet, dass** die Zunahme der Wanddicke (d) des Libellenkörpers (1) im Bereich seiner Oberseite (10) zur Längsmitte hin kontinuierlich ist.

3. Libelle nach Anspruch 1 oder Anspruch 2, **dadurch gekennzeichnet, dass** die Wanddicke (d) des Libellenkörpers (1) zumindest im Bereich seiner Längsmitte von den Seitenflächen (11, 12) zu Oberseite (10) des Libellenkörpers (1) hin kontinuierlich zunimmt.

4. Libelle nach einem der Ansprüche 1 bis 3, **dadurch gekennzeichnet, dass** der Libellenkörper (1) an seinen mittleren Abschnitt (6) anschließende Montageabschnitte (7) aufweist, welche rechteckige Stirnseiten (8, 9) des Libellenkörpers (1) ausbilden.

5. Libelle nach einem der Ansprüche 1 bis 4, **dadurch gekennzeichnet, dass** der Hohlraum (2) des Libellenkörpers (1) tonnenförmig ausgebildet ist.

6. Libelle nach einem der Ansprüche 1 bis 5, **dadurch gekennzeichnet, dass** sich der mittlere Abschnitt (6) des Libellenkörpers (1), über welchen der Libellenkörper (1) sowohl um seine Längsachse (30) als auch in seine Längsrichtung gekrümmt ausgebildet ist, zumindest um die halbe Längsausdehnung (I) der Blase (3) in achsialer Richtung beidseitig über den von den beiden Markierungsringen (5) zur Anzeige der Mittellage der Blase (3) begrenzten Bereich hinaus erstreckt.

7. Libelle nach Anspruch 6, **dadurch gekennzeichnet, dass** sich der mittlere Abschnitt (6) zumindest über die Längsausdehnung (L) des die Libellenflüssigkeit enthaltenden Hohlraums (2) erstreckt.

8. Libelle nach einem der Ansprüche 1 bis 7, **dadurch gekennzeichnet, dass** im Längsmittelschnitt des Libellenkörpers (1) gesehen der Radius der Oberseite (10) des Libellenkörpers (1) zumindest im mittleren Abschnitt (6) des Libellenkörpers (1) im Bereich zwischen 70 und 100mm, vorzugsweise im Bereich zwischen 80 und 90mm liegt.

9. Libelle nach einem der Ansprüche 1 bis 8, **dadurch gekennzeichnet, dass** im Längsmittelschnitt des Libellenkörpers (1) gesehen der Radius der oberen Begrenzung (14) des Hohlraums (2) des Libellenkörpers (1), vorzugsweise auch die untere Begrenzung des Hohlraums (2) des Libellenkörpers (1), zumindest im mittleren Abschnitt (6) des Libellenkörpers (1) im Bereich zwischen 150 und 1200mm liegt.

10. Libelle nach einem der Ansprüche 1 bis 9, **dadurch gekennzeichnet, dass** im Querschnitt durch die Längsmitte des Libellenkörpers (1) gesehen der Radius der die Oberseite (10) mit den Seitenflächen (11, 12) des Libellenkörpers (1) verbindenden Fläche im Bereich zwischen 6,5 und 9mm liegt.

11. Wasserwaage mit einer zur Horizontalmessung dienenden Libelle (17) nach einem der Ansprüche 1 bis 10.

12. Wasserwaage nach Anspruch 11, **dadurch gekennzeichnet, dass** die Wasserwaage Endkappen (21) aufweist, welche einen härteren Kunststoff (22) und einen zumindest über einen Bereich der Oberfläche des härteren Kunststoffs (22) sich erstreckende Schicht aus einem weicheren Kunststoff (23) aufweist.

13. Wasserwaage nach Anspruch 11 oder Anspruch 12, **dadurch gekennzeichnet, dass** in den Endkappen zur Außenseite der Wasserwaage hin geschlossenen Hohlräume (26, 27) angeordnet sind.
